Europäisches Patentamt

European Patent Office

Office européen des brevets

(19)

(11) Veröffentlichungsnummer : **0 121 004**
**B1**

# (12) EUROPÄISCHE PATENTSCHRIFT

(45) Veröffentlichungstag der Patentschrift :
26.03.86

(21) Anmeldenummer : 83201165.4

(22) Anmeldetag : 09.08.83

(51) Int. Cl.⁴ : **H 04 N 5/12**

(54) **Digitalschaltung zur Synchronisierung eines FBAS-Signals.**

(30) Priorität : 26.03.83 EP 83710013

(43) Veröffentlichungstag der Anmeldung :
**10.10.84 Patentblatt 84/41**

(45) Bekanntmachung des Hinweises auf die Patenterteilung : **26.03.86 Patentblatt 86/13**

(84) Benannte Vertragsstaaten :
**DE FR GB IT NL**

(56) Entgegenhaltungen :
**EP-A- 0 043 407**
**EP-A- 0 080 970**

(73) Patentinhaber : **Deutsche ITT Industries GmbH**
**Hans-Bunte-Strasse 19 Postfach 840**
**D-7800 Freiburg (DE)**
**DE**
**ITT INDUSTRIES INC.**
**320 Park Avenue**
**New York, NY 10022 (US)**
**FR GB IT NL**

(72) Erfinder : **Elmis, Herbert, Dipl.-Ing.**
**Berliner Strasse 86**
**D-7809 Denzlingen (DE)**
Erfinder : **Backes, Reiner, Dipl.-Ing.**
**Am Märzengraben 2**
**D-7800 Freiburg i.Br. (DE)**

(74) Vertreter : **Morstadt, Volker, Dipl.-Ing. et al**
**c/o Deutsche ITT Industries GmbH Patent/Lizenzab-**
**teilung Postfach 840 Hans-Bunte-Strasse 19**
**D-7800 Freiburg/Brsg. (DE)**

**0 121 004**

## Beschreibung

Die Erfindung betrifft eine Digitalschaltung zur Synchronisierung einer Impulsfolge entsprechend dem Oberbegriff des Anspruchs 1, der aus der veröffentlichten europäischen Patentanmeldung EP-A1-43 407 bekannt ist. Dort ist eine Digitalschaltung zur Synchronisierung einer Impulsfolge beschrieben, die als Ausgangssignal eines einstellbaren Frequenzteilers für ein Taktsignal entsteht, dessen Frequenz um mindestens eine Größenordnung höher ist als die der Impulsfolge, wobei die Impulsfolge mit Horizontalsynchronimpulsen synchronisiert wird, die in einem empfangenen Standard-Fernsehsignal enthalten und nach fernsehempfängerseitiger Demodulation als Farb-Bild-Austast-Synchron-Signal-Gemisch (FBAS-Signal) vorliegen, das einem vom Taktsignal getakteten Analog-Digital-Wandler zugeführt ist. Dabei wird die Teilungszahl des Frequenzteilers in Abhängigkeit von der über eine Mittelungszeit gemittelten Phasendifferenz zwischen der Impulsfolge und den Horizontalsynchronimpulsen eingestellt, und die Mittelungszeit ist gleich einer größeren Anzahl von Periodendauern der Horizontalsynchronimpulse.

Die Auflösung der digitalen Phasenmessung bei der bekannten Anordnung ist durch die Frequenz des Taktsignals vorgegeben und kann nur für einen begrenzten Zeitbereich durch die erwähnte Mittelung, die durch ein digitales Filter realisiert werden kann, erhöht werden. Phasenfehler jedoch, deren Änderungsfrequenz oberhalb der Grenzfrequenz des Filters liegen, können nur mit der Genauigkeit von einer Periode des Taktsignals gemessen werden. Bei der Horizontalsynchronisierung von Fernsehempfängern mit digitaler Signalverarbeitung, die gewöhnlich mit der vierfachen Referenzträgerfrequenz als Taktfrequenz arbeiten und bei denen ein derartiges Taktsignal auch als Taktsignal im Sinne der vorliegenden Erfindung und des genannten Standes der Technik verwendet wird, ist es erforderlich, mit einer größeren Phasenauflösung als der durch die Periode des Taktsignals gegebenen zu arbeiten.

Hier setzt die Erfindung, wie sie in den Ansprüchen gekennzeichnet ist, ein, und ihre Aufgabe besteht darin, eine gegenüber dem bekannten Stand der Technik verbesserte Digitalschaltung zur Synchronisierung, insbesondere Horizontalsynchronisierung von Farbfernsehempfängern mit digitaler Signalverarbeitung, anzugeben, die mit wesentlich verbesserter und wählbarer Phasenauflösung arbeitet. Ein Vorteil der Erfindung ergibt sich unmittelbar aus der Aufgabenlösung. Dazu trägt insbesondere die Verwendung des noch näher zu erörternden Frequenzteilers mit unganzem Teilungsfaktor nach der älteren europäischen Patentanmeldung 82 710 015.7 (EP-A1-80 970) veröffentlicht am 8.6.1983 bei. Ferner kann die Schaltung aufgrund ihrer, abgesehen vom Analog-Digital-Wandler, digitalen Arbeitsweise bevorzugt in der Technik integrierter Isolierschicht-Feldeffekttransistor-Schaltungen, also in der sogenannten MOS-Technik, realisiert werden.

Die Erfindung wird nun anhand der Figuren der Zeichnung näher erläutert.

Figur 1 zeigt schematisch in Form eines Blockschaltbilds das der Erfindung zugrundeliegende Prinzip anhand eines Ausführungsbeispiels für die Verarbeitung positiver FBAS-Signale,

Figur 2 zeigt eine bezüglich eines Details andere Variante der Anordnung nach Fig. 1

Figur 3 zeigt die wesentlichen Teile der Anordnung nach Fig. 1, die bei einer Abwandlung für die Verarbeitung negativer FBAS-Signal erforderlich sind,

Figur 4 zeigt eine Weiterbildung hinsichtlich der Eingangsbeschaltung der Erfindung,

Figur 5 zeigt eine andere vorteilhafte Weiterbildung, und

Figur 6 zeigt schematisch ein für die Erläuterung der Funktion wichtiges Kurvendiagramm.

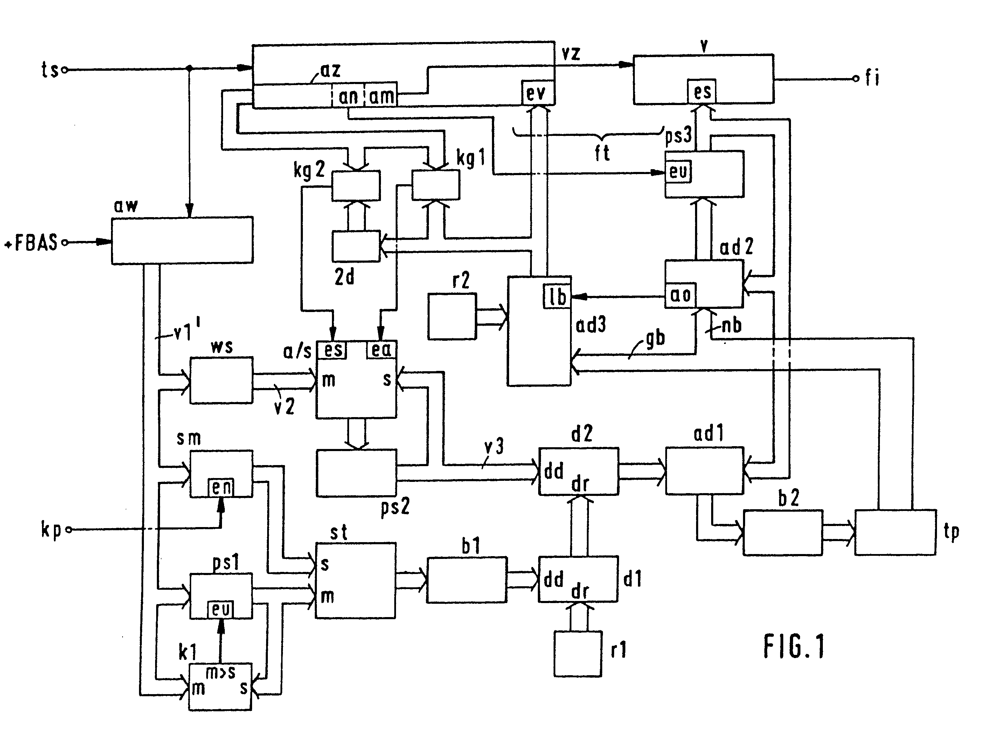

In Fig. 1 ist das schematische Blockschaltbild eines Ausführungsbeispiels der Erfindung für die Signalverarbeitung eines positiven FBAS-Signals gezeigt, das dem Analogeingang des vom Taktsignal ts getakteten Analog-Digital-Wandlers aw zugeführt ist. Sein Ausgang liegt am Eingang der Schwellwertstufe ws, deren Schwellwert gleich dem Schwarzwert-Sollwert sw ist. Dieser Sollwert kann als Digitalwort beispielsweise in einem Register oder einem Speicher enthalten sein, der mit der Schwellwertstufe ws in funktioneller Verbindung steht. Der Einfachheit halber ist in Fig. 1 ein derartiger Speicher jedoch nicht gezeigt.

Der Ausgang des Analog-Digital-Wandlers aw liegt auch am Eingang der Schwarzpegel-Meßstufe sm, deren Enable-Eingang en in jeder Zeile während des Bursts ein Impuls, nämlich der Key-Impuls kp, zugeführt, wird ferner am Minuend-Eingang m des ersten Komparators k1 sowie am Eingang des ersten Pufferspeichers ps1, dessen Ausgang am Subtrahend-Eingang s des ersten Komparators liegt. Dessen Minuend-größer-Subtrahend-Ausgang m > s ist am Übernahmeeingang eu des ersten Pufferspeichers ps1 angeschlossen. Die beiden Stufen k1, ps1 haben somit die Funktion der Feststellung des Maximums des Ausgangssignals des Analog-Digital-Wandlers aw.

Der Ausgang der Schwarzpegel-Meßstufe sm liegt am Subtrahend-Eingang des Subtrahierers st und der Ausgang des ersten Pufferspeichers ps1 an dessen Minuend-Eingang m, während dessen Ausgang über den ersten Begrenzer b1 am Dividend-Eingang dd des ersten Dividierers d1 liegt. Dabei begrenzt der erste Begrenzer b1 auf einen positiven Zahlenwert nahe des Nullpunkts. Mittels des Subtrahierers st wird somit die Amplitude der Horizontal-Synchronimpulse ermittelt und mittels des ersten Begrenzers b1 auf einen endlichen Wert begrenzt, so daß der erste Dividierer d1 ein sinnvolles Ergebnis liefern kann.

Der Ausgang der Schwellwertstufe ws liegt am Augend/Minuend-Eingang m des Addierer/Subtrahierers a/s, dessen Ausgang am Eingang des zweiten Pufferspeichers ps2 angeschlossen ist, dessen Ausgang wiederum am Addend/Subtrahend-Eingang s des Addierer/Subtrahierers a/s und am Dividend-

2

Eingang des zweiten Dividierers d2 angeschlossen ist. An seinem Ausgang liegt der erste Eingang des ersten Addierers ad1, dessen Ausgang über den zweiten Begrenzer b2 am Eingang des digitalen Tiefpasses tp angeschlossen ist, der die bereits erwähnte Mittelungsfunktion erfüllt. Dabei begrenzt der zweite Begrenzer b2 auf den Zahlenwert des für einen vorgegebenen Fangbereich der Synchronisierung erforderlichen Phasenfehlers.

Für die folgende Erläuterung wird zunächst lediglich vorausgesetzt, daß der Ausgang des Tiefpasses tp m-stellig ist, wobei m zunächst als beliebig und ganzzahlig angenommen wird. Von diesem m-stelligen Ausgang sind p niederwertige Stellen nb mit dem ersten Eingang des zweiten Addierers ad2 verbunden, dessen Ausgang am Eingang des dritten Pufferspeichers ps3 liegt.

Der Ausgang des dritten Pufferspeichers ps3 ist mit dem jeweils zweiten Eingang des ersten und des zweiten Addierers ad1, ad2 sowie mit dem Einstelleingang es der digital einstellbaren, aus $2^p$ Stufen gleicher Verzögerungszeit tv bestehenden Verzögerungsleitung v verbunden, deren Einstellschrittweite gleich dieser Verzögerungszeit tv und gleich der durch $2^p$ geteilten Periodendauer t des Taktsignals ts ist, deren Eingang ferner mit dem Höchstzählerstandausgang am des Vorwahlzählers vz verbunden ist, an dessen Zähleingang das Taktsignal ts liegt, und an deren Ausgang die synchronisierte Impulsfolge fi auftritt.

Der Überlaufausgang ao des zweiten Addierers ad2 liegt an der niederstwertigen Stelle lb des ersten Eingangs des dritten Addierers ad3, dessen zweiter Eingang an den m-p restlichen Stellen gb des Tiefpaßausgangs angeschlossen ist, dessen drittem Eingang ferner der ganzzahlige Teil des Sollwerts der Teilungszahl zugeführt ist und dessen Ausgang am Vorwahleingang ev des Vorwahlzählers vz liegt. Der erwähnte Teilungszahl-Sollwert kann wiederum in einem Register oder Speicher r2 enthalten sein, das/der mit dem dritten Addierer ad3 in funktioneller Verbindung steht.

Der Übernahme-Eingang eu des dritten Pufferspeichers ps3 ist mit einem der vor dem Höchstzählerstandausgang am liegenden Zählerstandausgänge an des Vorwahlzählers vz verbunden.

Die Teilschaltungen vz, v, ps3, ad2, ad3 entsprechen den Teilschaltungen Z, V, S, A1, A2 der oben erwähnten älteren europäischen Anmeldung 82 71 0015.7. Bei der vorliegenden Erfindung ist die Funktion des Teilungszahlregisters R der älteren Anmeldung vom Tiefpaß tp übernommen. Da die ältere Anmeldung am Anmeldetag der vorliegenden Erfindung noch nicht veröffentlicht war, wird die Funktion dieser Teilschaltungen hiers kurz erläutert. Über den Vorwahleingang ev kann der Vorwahlzähler vz ganzzahlig eingestellt werden. Der Einstellwert wird dabei im wesentlichen durch den Teilungszahlsollwert und die m-p Stellen gb des Ausgangssignals des Tiefpasses tp vorgegeben. Die p niederwertigen Stellen nb dieses Ausgangssignals beeinflussen die digital einstellbare Verzögerungsleitung v derart, daß sich eine Frequenzteilung durch eine unganze Zahl ergibt. Solche Zahlen können mathematisch bekanntlich auf verschiedene Art und Weise geschrieben werden, nämlich als Zahl mit einem Komma, als echter oder als unechter Bruch entsprechend :

$$a + 0,b = a + d/e = g/e.$$

In dieser Schreibweise entspricht der linke Term der bekannten Kommaschreibweise (z. B. 1,2), der mittlere Term der Schreibweise aus ganzer Zahl und echtem Bruch (z. B. 1 1/5) und der rechte Term der Schreibweise als unechter Bruch (z. B. 6/5).

Pro Zählerumlauf des Vorwahlzählers vz wird im Übernahme-Zeitpunkt das am Ausgang des zweiten Addierers ad2 vorhandene Signal in den dritten Pufferspeicher ps3 übernommen und zugleich an den zweiten Eingang des zweiten Addierers ad2 gelegt. Somit wird das an seinem ersten Eingang liegende Signal, das den erwähnten unganzen Stellen hinter dem Komma entspricht, der Teilungszahl hinzuaddiert, und am Ausgang des dritten Pufferspeicher ps3 und somit am Einstelleingang es der Verzögerungsleitung v wird pro Zählerumlauf das Ergebnis um die Zahl mit den nichtganzen Stellen erhöht. Die Verzögerungszeit vt steigt somit pro Zählerumlauf um jeweils denselben Betrag an. Erreicht der zweite Addierer ad2 die durch seine Stellenzahl vorgegebene maximale Addierkapazität, so erscheint an seinem Überlaufausgang ao ein Überlaufsignal, das der niederstwertigen Stelle lb des ersten Eingangs des dritten Addierers ad3 zugeführt wird und in diesem Addierer zu einer Erhöhung des Ergebnisses um eine Einheit führt.

Da der Ausgang dieses Addierers mit dem Einstelleingang es des Vorwahlzählers vz verbunden ist, wird das an sich durch die ganzen Stellen der Teilungszahl vorgegebene Einstellwort um eine Einheit erhöht, und der Vorwahlzähler vz macht einen Zählerumlauf, der eine Periode t länger ist als die übrigen Zählerumläufe. Da andererseits bei Erscheinen des erwähnten Überlaufsignals am Überlaufausgang ao des zweiten Addierers ad2 dieser zugleich in seinen Zustand zurückkehrt, in dem lediglich die niederwertigen Stellen nb aufsummiert werden, verschwindet das Überlaufsignal, der Vorwahlzähler vz macht wieder seine kürzeren Zählerumläufe, und die Verzögerungsleitung v beginnt mit der durch die nichtganzen Stellen vorgegebenen Grundeinstellung sowie dem eventuell vorhandenen Rest der vorhergehenden Addition wieder zu verzögern.

Der Ausgang des dritten Addierers ad3 ist mit dem ersten Eingang des ersten Koinzidenzgatters kg1 bzw. über den Durch-Zwei-Dividierer 2d mit dem ersten Eingang des zweiten Koinzidenzgatters kg2 verbunden, an deren jeweiligem zweiten Eingang die Zählerstandausgänge des Vorwahlzählers vz angeschlossen sind. Dabei liegt deren jeweiliger Ausgang am Addier- bzw. Subtrahier-Bedingungs-

3

eingang ae bzw. es des Addierer/Subtrahierers a/s. Schließlich ist dem Divisor-Eingang dr des ersten Dividierers d1 der Zahlerwert 2p zugeführt. Dieser kann wiederum im Register oder Speicher r1 abgelegt sein.

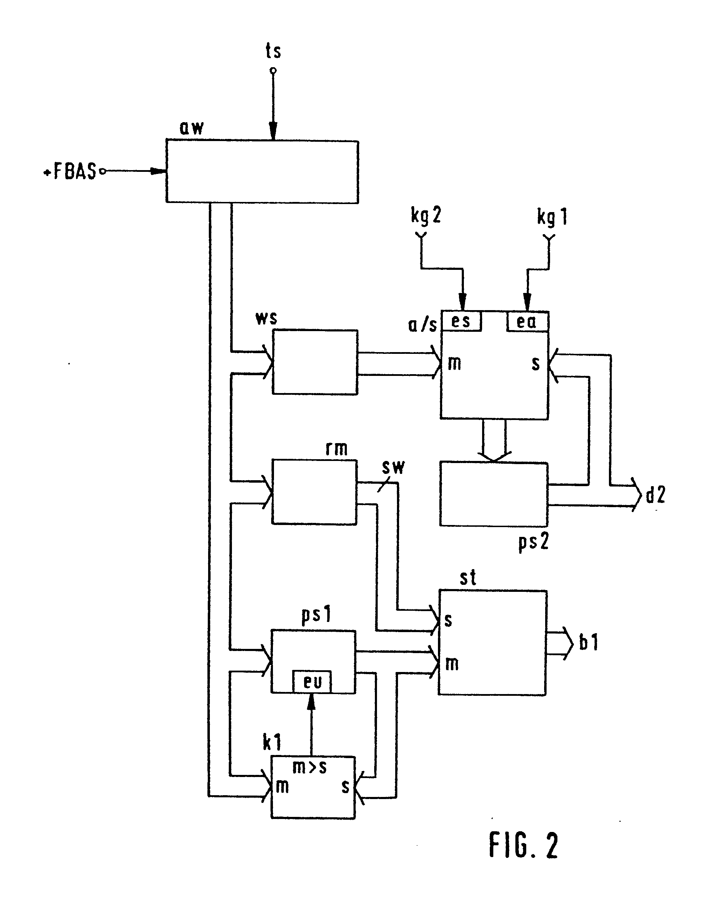

Die Fig. 2 zeigt ausschnittsweise eine Variante des Ausführungsbeispiels nach Fig. 1, und zwar ist die Schwarzwert-Meßstufe sm nach Fig. 1 durch den umprogrammierbarnichtflüchtigen Speicher rm ersetzt, in dem der Schwarz-Sollwert sw abgelegt ist.

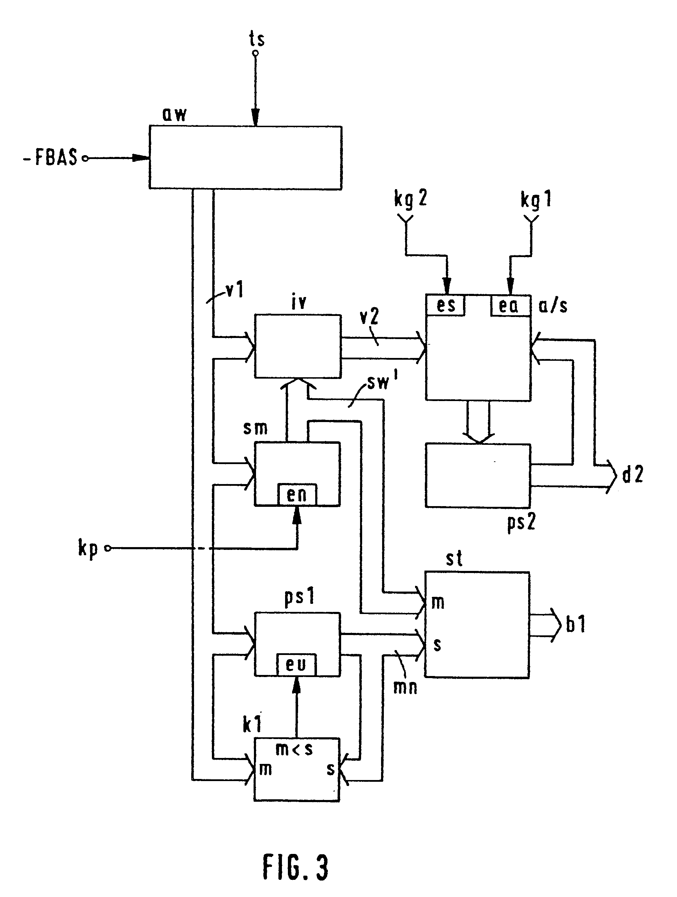

Die Fig. 3 zeigt ausschnittweise die Anordnung nach Fig. 1 mit den Teilschaltungen, die bei Verarbeitung eines negativen FBAS-Signals zu ändern sind. Die Schwellwertstufe ws nach Fig. 1 ist durch die Subtrahier/Invertierungsstufe iv ersetzt, so daß deren erster Eingang am Ausgang des Analog-Digital-Wandlers aw und deren zweiter Eingang am Ausgang der Schwarzwert-Meßstufe sm liegt. Die Subtrahier/Invertierungsstufe iv bildet aus dem digitalen FBAS-Signal v1 und dem digitalen Schwarzwert-Signal sw' das vom Horizontal-synchronsignal befreite Signal v2 nach folgender Formel :

$$v2 = 1/2 \; (\sqrt{(sw' - v1)^2} + sw' - v1).$$

Ferner ist in der Abwandlung nach Fig. 3 die Beschaltung der Eingänge des Subtrahierers st gegenüber der von Fig. 1 vertauscht, so daß der Ausgang der Schwarzwert-Meßstufe sm an dessen Minuend-Eingang und der Ausgang des ersten Pufferspeichers ps1 an dessen Subtrahend-Eingang s liegt. Schließlich ist der Übernahmeeingang eu des ersten Pufferspeichers ps1 nicht vom Minuend-größer-Subtrahend-Ausgang sondern vom Minuend-kleiner-Subtrahend-Ausgang m < s des ersten Komparators k1 gesteuert. Somit wird mittels der Stufen ps1, k1 nicht das Maximum, sondern das Minimum mn des digitalen FBAS-Signals ermittelt und somit wiederum wie bei der Anordnung nach Fig. 1 die Amplitude der Synchronisierimpulse.

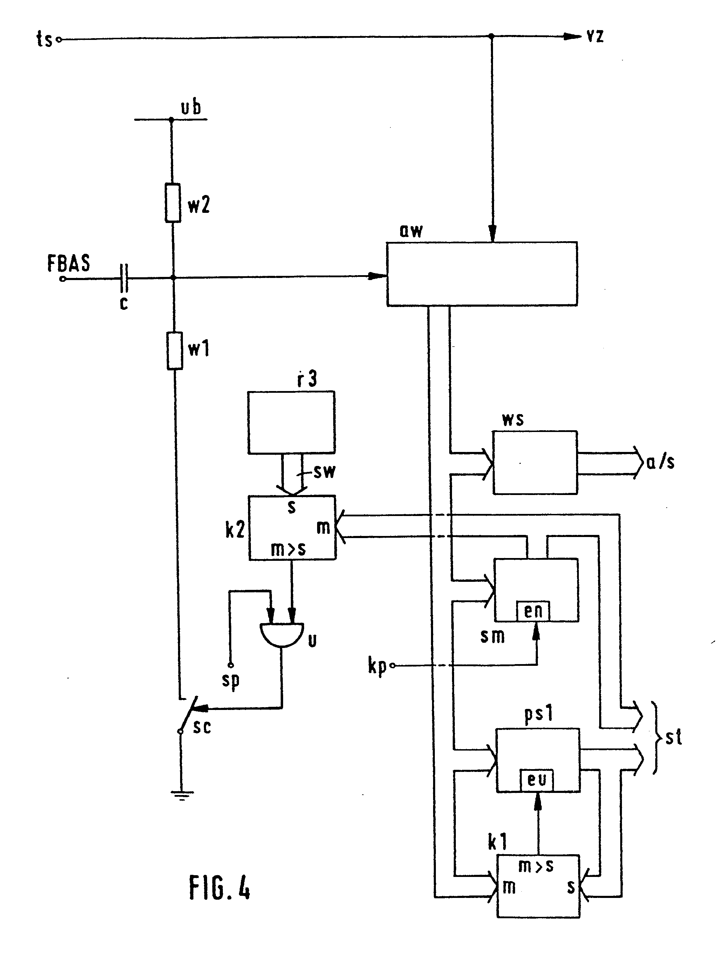

In Fig. 4 ist eine Weiterbildung der Erfindung gezeigt, die sowohl bei der Anordnung nach Fig. 1 als auch nach Fig. 3 angewendet werden kann. In Fig. 4 ist die Anwendung zusammen mit einer Anordnung nach Fig. 1 gezeigt, wobei diese allerdings nur wiederum ausschnittweise dargestellt ist.

In Fig. 4 ist der Ausgang der Schwarzwert-Meßstufe sm mit dem Minuend-Eingang des zweiten Komparators k2 verbunden, dessen Subtrahend-Eingang der Schwarzpegel-Sollwert sw zugeführt ist, der wiederum im Register oder Speicher r3 abgelegt sein kann. Der Minuend-größer-Subtrahend-Ausgang m > s liegt am ersten Eingang des UND-Gatters u, dessen zweitem Eingang in jeder Zeile ein während des hinter dem Burst liegenden Schwarzschulterteils auftretender Impuls sp zugeführt ist. Der Ausgang des UND-Gatters u ist mit dem Steuereingang des mit seinem einen Pol am Schaltungsnullpunkt liegenden elektronischen Schalters sc verbunden, dessen anderer Pol über den ersten Widerstand w1 am Eingang des Analog-Digital-Wandlers aw angeschlossen ist. Dieser liegt auch über den zweiten Widerstand w2 an der Betriebsgleichspannungsquelle ub, während das FBAS-Signal dem Eingang des Analog-Digital-Wandlers aw über den Kondensator c zugeführt ist. Die in Fig. 4 zusätzlich gegenüber Fig. 1 vorgesehenen Schaltungsteile ermöglichen nach dem Einschalten des Fernsehempfängers, daß, da der Schalter sc geschlossen ist, zeilenfrequente Stromimpulse über den ersten Widerstand w1 zum Eingang des Analog-Digital-Wandlers aw gelangen und dieser auf einen konstanten Spannungspegel eingeregelt wird.

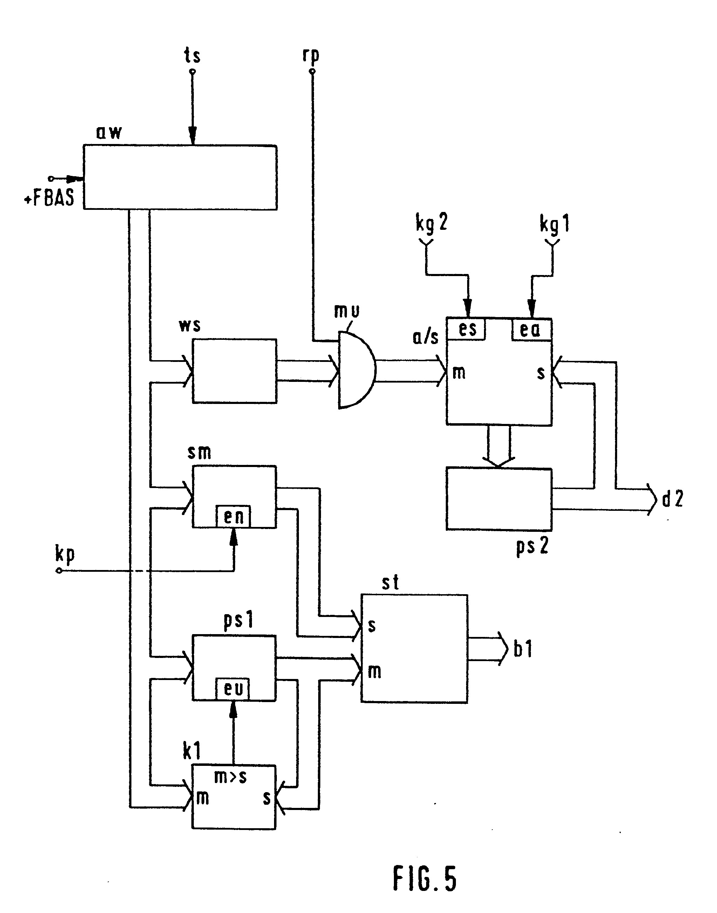

Die Fig. 5 zeigt eine andere Weiterbildung der Erfindung, und zwar ist zwischen dem Ausgang der Schwellwertstufe ws bzw. dem der Subtrahier/Invertierungsstufe iv und dem Eingang des Addierer/Subtrahierers a/s das Mehrfach-UND-Gatter mu vorgesehen, dessen Anzahl an Eingangsleitungen um eins größer ist als die Anzahl der Ausgangsleitungen der Schwellwertstufe ws. Dieser zusätzliche Eingang wird mit dem Störunterdrückungsimpuls rp gespeist, der während der Synchronimpulse auftritt und diese um etwa ± 1 µs symmetrisch überlappt.

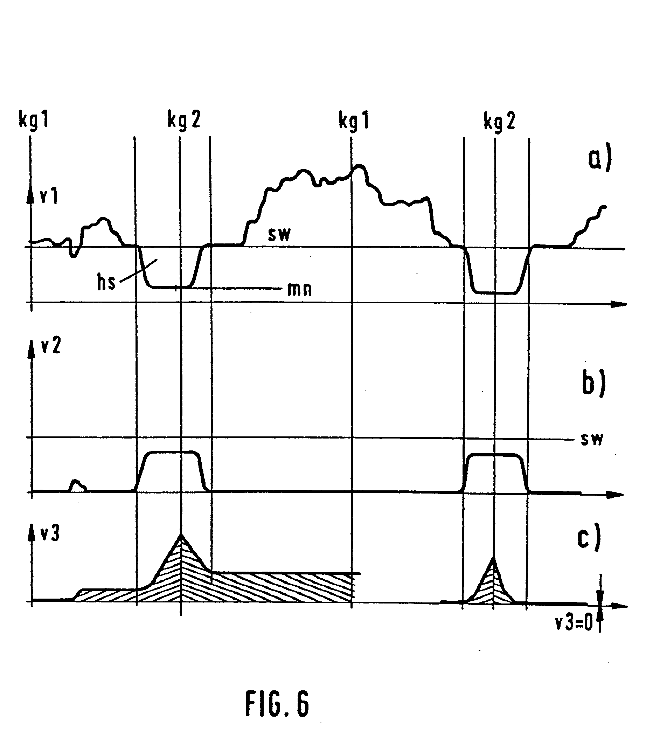

Zur folgenden Funktionsbeschreibung wird auf die Fig. 3 in Verbindung mit Fig. 1 und auf die Fig. 6 Bezug genommen, in der drei für das Verständnis wesentliche Kurven dargestellt sind. Dabei ist zu berücksichtigen, daß obwohl es sich bei den dargestellten Signalen v1, v2, v3 um Digitalsignale handelt, diese in analoger Darstellung wiedergeben sind. Die Fig. 6a zeigt das Signal v1 am Ausgang des Analog-Digital-Wandlers aw, das somit in der in Fig. 6a gewählten analogen Darstellung das FBAS-Signal ist. In Fig. 6a ist es negativ, d. h. die Horizontal- und Vertikal-Synchronimpulse sind im Gegensatz zu einem positiven FBAS-Signal diejenigen Signalanteile, die die kleinste positive Amplitude mn aufweisen.

Die mit kg1 bzw. mit kg2 bezeichneten senkrechten Bezugslinien stellen die Vorder- oder Rückflanken des Ausgangssignals des Koinzidenzgatters kg1 bzw. kg2 dar, wobei die Lage der erwähnten Flanken die zeitliche Bezugslage für die Phasenmessung nach der Erfindung darstellt. Zwischen den Flanken kg1, kg2 ist der Addierer/Subtrahierer a/s nämlich auf Addieren geschaltet, so daß errim Zusammenwirken mit dem zweiten Pufferspeicher ps2 als « positiver » Akkumulator wirkt und somit eine positive Integration des Ausgangssignals v2 der Schwellwertstufe ws vornimmt. Zwischen den Flanken kg2, kg1 arbeitet der Addierer/Subtrahierer a/s jedoch als Subtrahierer, so daß er zusammen mit dem Pufferspeicher ps2 als « negativer » Akkumulator wirkt und von den zwischen den Flanken kg1, kg2 aufsummierten Werten nun wieder Werte subtrahiert, wie dies durch die dreieckförmige Kurve in Fig. 6c veranschaulicht ist.

Im synchronisierten Zustand liegt die Flanke kg2 genau in der Mitte des Horizontal-Synchronimpulses hs, wie dies von der eingangs erwähnten bekannten Anordnung nach der veröffentlichten Anmeldung EP-A1-43 407 bekannt ist. Dieser Fall entspricht den in Fig. 6 rechts gezeigten Kurventeilen, bei denen in Fig. 6c die dreieckförmige Kurve links und rechts der Linie kg2 gleiche Anteile hat, so daß das Gesamtintegral über den Horizontal-Synchronimpuls hs, der zwischen den beiden links und rechts der Linien kg2 verlaufenden Linien liegt, gleich null ist. In Fig. 6a, b ist der Schwarzpegel-Sollwert mit sw bezeichnet.

Das Signal v3 am Ausgang des Addierer/Subtrahierers a/s stellt somit, obwohl es einen Amplitudenwert darstellt, ein Maß für die Phasenverschiebung zwischen Horizontal-Synchronimpulsen und dem Taktsignal ts dar. Es wird nun in der weiteren Schaltung in eine Größe umgeformt, die tatsächlich eine Phasendifferenz darstellt. Hierzu wird zunächst mittels des Subtrahierers st und des ersten Betgrenzers b1 die tatsächlich vorhandene Amplitude mn der Horizontal-Synchronimpulse gemessen. Mittels des ersten Dividierers d1 wird diese Synchronimpuls-Amplitude mn auf den beabsichtigten Auflösungsfaktor der Phasenmessung bezogen, der entsprechend der Aufgabenstellung der Erfindung größer sein soll als die Periodendauer des Taktsignals ts. Der dem Divisor-Eingang dr des ersten Dividierers d1 zugeführte Zahlenwert ist nämlich gleich der Stufenzahl der digitalen Verzögerungsleitung v, deren Funktion und Zusammenwirken mit dem Vorwahlzählers vz und den weiteren, diesen beiden Teilschaltungen zugeordneten Schaltungsteilen bereits oben erläutert ist. Hier sei nur noch einmal kurz erwähnt, daß die Verzögerungsleitung v $2^p$ Stufen gleicher Verzögerungszeit hat ; demzufolge ist der dem Divisor-Eingang dr des ersten Dividierers d1 zugeführte Zahlenwert ebenfalls gleich $2^p$ zu wählen. Dieser Zahlenwert kann wiederum in einem Register oder Speicher r1 abgelegt sein.

Das dem Divisor-Eingang dr des zweiten Dividierers d2 zugeführte Ausgangssignal des ersten Dividierers d1 repräsentiert somit die auf die Stufenzahl der digitalen Verzögerungsleitung v bezogene Amplitude der Horizontal-Synchronimpulse. Da das gemittelte Integral der Horizontal-Synchronimpulse als Signal v3 dem Dividend-Eingang dd des zweiten Dividierers d2 zugeführt ist, ist dessen Ausgangssignal in guter Näherung bereits die gewünsche Phasenverschiebung zwischen Takt- und Horizontal-Synchronimpulsen, genauer gesagt der zeitliche Abstand zwischen der Mitte eines Synchronimpulses und einem Taktimpuls.

Wenn zwischen diesen beiden Impulsen keine Phasendifferenz besteht, so ist das Signal v3, wie bereits erwähnt, gleich null, wie in Fig. 6c rechts gezeigt ist. Andererseits ergibt sich bei einer Phasenverschiebung zwischen den erwähnten beiden Impulsen ein von null verschiedenes Signal v3, wie es in Fig. 6c links gezeigt ist. In den Fig. 6a, 6b liegt daher die Flanke kg2 nicht in der Mitte des Synchronimpulses, ja es ist sogar ein Zipfel der Bildinformation unterhalb des Schwarzschulterwerts sw gelangt, auf dem die Schwellwertstufe ws begrenzt.

Wie bereits erwähnt, entsteht am Ausgang des zweiten Dividierers d2 bereits in guter Näherung ein Signal bezüglich der Phasendifferenz zwischen Taktsignal ts und Horizontal-Synchronimpulsen. Dieses Signal ist bezogen auf die Stufenzahl der digitalen Verzögerungsleitung v und wird nun mittels der nachgeordneten Stufen noch insofern « korrigiert », als es nunmehr auf das Tiefpaßausgangssignal noch bezogen wird. Obwohl die Flanken kg1, kg2 vom Vorwahlzähler vz und somit nur von ganzzahligen Teilen des Taktsignals ts abgeleitet sind, ist die benötigte Berücksichtigung des durch die Stufenzahl der digitalen Verzögerungsleitung v vorgegebenen Auflösungsvermögens möglich. Dies wird durch den ersten Addierer ad1 erreicht, der die p Stellen nb des Ausgangssignal des digitalen Tiefpasses tp zusammen mit dem dritten Pufferspeicher ps3 akkumuliert. Diese Werte werden dem Ausgangssignal des zweiten Dividierers d2 hinzuaddiert und somit das gewünschte Auflösungsvermögen erreicht. Dies ist möglich, da die Anordnung linear arbeitet und diese Addition somit kein falsches Ergebnis zeitigt. Durch diese Maßnahme wird somit, bezogen auf die Synchronimpulse, die durch den Umschaltzeitpunkt des Addierer/Subtrahierers a/s von Addieren auf Subtrahieren bewirkte Einstellung im Hinblick auf die eingestellte Stufenzahl der digitalen Verzögerungsleitung v korrigiert. Somit ist der ermittelte Phasenfehler bis auf die Verzögerungszeit tv einer Stufe der Verzögerungsleitung v genau.

Durch die eben geschilderte Maßnahme läßt sich der Einsatz einer weiteren digitalen Verzögerungsleitung v bei der Ansteuerung der Koinzidenzgatter kg1, kg2 vermeiden. Spezielle Schaltungen zur Realisierung solcher digitaler Verzögerungsleitungen sind aus der veröffentlichten europäischen Anmeldung EP 59 802 A1 bekannt oder sind in der am Anmeldetag der vorliegenden Anmeldung noch nicht veröffentlichten europäischen Anmeldung 83 10 3820.3 mit der Priorität der europäischen Anmeldung 83 10 1491.5 der Anmelderinnen beschrieben.

### Patentansprüche

1. Digitalschaltung zur Synchronisierung einer Impulsfolge (fi), die als Ausgangssignal eines einstallbaren Frequenzteilers (ft) für ein Taktsignal (ts) entsteht, dessen Frequenz um mindestens eine Größenordnung höher ist als die der Impulsfolge (fi), mit Horizontal-Synchronimpulsen (hs), die in einem empfangenen Standard-Fernsehsignal enthalten sind das nach fernsehempfängerseitiger Demodulation als Farb-Bild-Austast-Synchron-Signal-Gemisch (FBAS-Signal) vorliegt, das einem vom Taktsignal (ts) getakteten Analog-Digital-Wandler (aw) zugeführt ist, wobei die Teilungszahl des Frequenzteilers (ft) in Abhängigkeit von der über eine Mittelungszeit gemittelten Phasendifferenz zwischen der Impulsfolge (fi) und den Horizontal-Synchronimpulsen (hs) eingestellt wird und die Mittelungszeit gleich einer größeren Anzahl von deren Periodendauer ist und wobei vom Frequenzteiler (ft) in der Mitte des Horizontal-Synchronimpulses (hs) ein Schaltsignal mit dem Puls-Pausen-Verhältnis 1 : 1 abgeleitet ist, gekennzeichnet durch folgende Merkmale bei zu verarbeitendem positivem FBAS-Signal :

der Ausgang des Analog-Digital-Wandlers (aw) liegt am Eingang einer Schwellwertstufe (ws), deren Schwellwert gleich dem Schwarzwert-Sollwert (sw) ist, ferner am Eingang einer Schwarzpegel-Meßstufe (sm), deren Enable-Eingang (en) in jeder Zeile während des Bursts ein Impuls (kp), der Keyimpuls, zugeführt ist, und am Minuend-Eingang (m) eines ersten Komparators (k1) sowie am Eingang eines ersten Pufferspeichers (ps1), dessen Ausgang am Subtrahend-Eingang (s) des ersten Komparators (k1) liegt, dessen Minuend-größer-Subtrahend-Ausgang (m > s) am Übernahme-Eingang (eu) des ersten Puffer-speichers (ps1) liegt,

der Ausgang der Schwarzpegel-Meßstufe (sm) oder der Ausgang eines den Schwarzpegel-Sollwert (sw) enthaltenden umprogrammierbar-nichtflüchtigen Speichers (rm) bzw. der Ausgang des ersten Pufferspeichers (ps1) liegen am Subtrahend- bzw. Minuend-Eingang (s bzw. m) eines Subtrahierers (st), dessen Ausgang über einen ersten Begrenzer (b1) am Dividend-Eingang (dd) eines ersten Dividierers (d1) liegt, wobei der erste Begrenzer (b1) auf einen positiven Zahlenwert nahe des Nullpunkts begrenzt,

der Ausgang der Schwellwertstufe (ws) liegt am Augend/Minuend-Eingang (m) eines Addierer/Subtrahierers (a/s), dessen Ausgang am Eingang eines zweiten Puffer-speichers (ps2) liegt, dessen Ausgang am Addend/Subtrahend-Eingang (s) des Addierer/Subtrahierers (a/s) und am Dividend-Eingang (dd) eines zweiten Dividierers (d2) angeschlossen ist,

an dessen Ausgang liegt der erste Eingang eines ersten Addierers (ad1), dessen Ausgang über einen zweiten Begrenzer (b2) am Eingang eines digitalen Tiefpasses (tp) angeschlossen ist, wobei der zweite Begrenzer (b2) auf den Zahlenwert des für einen vorgegebenen Fangbereich der Synchronisierung erforderlichen Phasenfehlers begrenzt,

p niederwertige Stellen (nb) des m-stelligen Ausgangs des Tiefpasses (tp) sind mit dem ersten Eingang eines zweiten Addierers (ad2) verbunden, dessen Ausgang am Eingang eines dritten Puffer-speichers (ps3) liegt,

der Ausgang des dritten Pufferspeichers (ps3) liegt jeweils am zweiten Eingang des ersten und des zweiten Addierers (ad1, ad2) sowie am Einstelleingang (es) einer digital einstellbaren, aus $2^p$ Stufen gleicher Verzögerungszeit (tv) bestehenden Verzögerungsleitung (v), deren Einstellschrittweite gleich dieser Verzögerungszeit (tv) und gleich der durch $2^p$ geteilten Periodendauer (t) des Taktsignals (ts) ist, deren Eingang ferner mit dem Höchstzählerstand-Ausgang (am) eines Vorwahlzählers (vz) verbunden ist, an dessen Zähleingang das Taktsignal (ts) liegt, und an deren Ausgang die synchronisierte Impulsfolge (fi) auftritt,

der Überlaufausgang (ao) des zweiten Addierers (ad2) liegt an der niederstwertigen Stelle (1b) des ersten Eingangs eines dritten Addierers (ad3), dessen zweiter Eingang an den m-p restlichen Stellen (gb) des Tiefpaß-Ausgangs angeschlossen ist, wobei dem dritten Eingang des dritten Addierers (ad3) der ganzzahlige Teil des Sollwerts der Teilungszahl zugeführt ist und wobei dessen Ausgang am Vorwahl-Eingang (ev) des Vorwahl-Zählers (vz) liegt,

der Übernahme-Eingang (eu) des dritten Pufferspeichers (ps3) ist mit einem der vor dem Höchstzählerstand-Ausgang (am) liegenden Zählerstand-Ausgänge (an) des Vorwahl-Zählers (vz) verbunden,

zur Ableitung des Schaltsignals aus dem Frequenzteiler (ft) ist der Ausgang des dritten Addierers (ad3) mit dem ersten Eingag eines ersten Koinzidenzgatters (kg1) bzw. über einen Durch-Zwei-Dividerer (2d) mit dem ersten Eingang eines zweiten Koinzidenzgatters (kg2) verbunden, an deren jeweiligem zweitem Eingang die Zählerstand-Ausgänge des Vorwahlzählers (vz) angeschlossen sind, wobei deren jeweiliger Ausgang am Addier- bzw. Subtrahier-Bedingungseingang (ae, es) des Addierer/Subtrahierers (a/s) liegt, und

am Divisor-Eingang (dr) des ersten Dividierers (d1) liegt der Zahlenwert $2^p$.

2. Abwandlung der Digitalschaltung nach Anspruch 1 für zu verarbeitende negative FBAS-Signale, gekennzeichnet durch folgende Merkmale :

die Schwellwertstufe (ws) ist durch eine Subtrahier/Invertierungsstufe (iv) ersetzt, deren erster Eingang am Ausgang des Analog-Digital-Wandlers (aw) und deren zweiter Eingang am Ausgang der Schwarzpegel-Meßstufe (sm) liegt und die aus dem digitalen FBAS-Signal (v1) und dem digitalen Schwarzwert-Signal (sw') ein vom Horizontal-Synchronsignal (hs) befreites Signal (v2) nach der Formel bildet :

$$v2 = 1/2 \ (\sqrt{(sw' - v1)^2} + sw' - v1), \ und$$

der Ausgang der Schwarzwert-Meßstufe (sm) liegt am Minuend-Eingang (m) und der Ausgang des ersten Pufferspeichers (ps1) am Subtrahend-Eingang (s) des Subtrahierers (st), dessen Übernahme-eingang (eu) am Minuend-kleiner-Subtrahend-Ausgang (m < s) des ersten Komparators (k1) angeschlossen ist (Fig. 3).

3. Digitalschaltung nach Anspruch 1 oder 2, gekennzeichnet, durch folgende Merkmale :

der Ausgang der Schwarzpegel-Meßstufe (sm) liegt am Minuend-Eingang (m) eines zweiten Komparators (k2), dessen Subtrahend-Eingang (s) der Schwarzpegel-Sollwert (sw) zugeführt ist und dessen Minuend-größer-Subtrahend-Ausgang (m > s) am ersten Eingang eines UND-Gatters (u) liegt, dessen zweitem Eingang in jeder Zeile ein während des hinter dem Burst liegenden restlichen Schwarzschulterteils (hintere Schwarzschulter) auftretender Impuls (sp) zugeführt ist,

6

der Ausgang des UND-Gatters (u) ist mit dem Steuereingang eines mit einem Pol am Schaltungsnullpunkt liegenden elektronischen Schalters (sc) verbunden, dessen anderer Pol über einen ersten Widerstand (w1) am Eingang des Analog-Digital-Wandlers (aw) angeschlossen ist, von dem ein zweiter Widerstand (w2) zu einer Betriebsgleichspannungsquelle (ub) führt, und

daß FBAS-Signal ist dem Eingang des Analog-Digital-Wandlers (aw) über einen Kondensator (c) zugeführt (Fig. 4).

4. Digitalschaltung nach einem der Ansprüche 1 bis 3, dadurch gekennzeichnet, daß zwischen dem Ausgang der Schwellwertstufe (ws) bzw. dem der Subtrahier/Invertierungsstufe (iv) und dem Eingang des Addierer/Subtrahierers (a/s) ein Mehrfach-UND-Gatter (mu) mit einem gegenüber der Anzahl an Ausgangsleitungen der Schwellwertstufe (ws) bzw. der Subtrahier/Invertierungsstufe (iv) weiteren Eingang liegt, dem ein während der Synchronimpulse (hs) auftretender und diese um ± 1 μs überlappender Störunterdrückungsimpuls (rp) zugeführt ist.

## Claims

1. Digital circuit for synchronizing a pulse train (fi) obtained as an output signal of a presettable frequency divider (ft) for a clock signal (ts) having a frequency at least one order of magnitude higher than that of the pulse train (fi) with horizontal synchronizing pulses (hs) contained in received standard television signal which, after being demodulated in the television receiver, is present as the composite colour signal, which is applied to an analog-to-digital converter (aw) clocked by the clock signal (ts), the divisor of the frequency divider (ft) being set depending on the phase difference between the pulse train (fi) and the horizontal synchronizing pulses (hs) which is averaged over an averaging time equal to a major number of periods of the horizontal synchronizing pulses (hs), and a switching signal with a 1 : 1 mark-to-space ratio being derived from the frequency divider (ft) in the middle of the horizontal synchronizing pulse (hs),

characterized by the following features if a positive composite colour signal is to be processed :

The output of the analog-to-digital converter (aw) is connected to the input of a threshold stage (ws) having a threshold value equal to the desired black level (sw), to the input of a black-level-measuring stage (sm) to whose enable input (en) a pulse (kp), the keying pulse, is applied in each line during the burst, to the minuend input (m) of a first comparator (k1), and to the input of a first buffer memory (ps1) having its output connected to the subtrahend input (s) of the first comparator (k1), whose minuend-greater-than subtrahend output (m > s) is connected to the enable input (eu) of the first buffer memory (ps1) ;

the output of the black-level-measuring stage (sm) or the output of a reprogrammable nonvolatile memory (rm) containing the desired black level (sw) and the output of the first buffer memory (ps1) are connected to the subtrahend input (s) and the minuend input (m), respectively, of a subtracter (st) having its output connected to the dividend input (dd) of a first divider (d1) via a first limiter (b1) which limits its output to a positive numerical value near zero ;

the output of the threshold stage (ws) is connected to the augend/minuend input (m) of an adder-subtracter (a/s) having its output coupled to the input of a second buffer memory (ps2) whose output is connected to the addend/subtrahend input (s) of the adder-substracter (a/s) and to the dividend input (dd) of a second divider (d2) ;

the output of the second divider (d2) is connected to the first input of a first adder (ad1) having its output connected to the input of a digital low-pass filter (tp) via a second limiter (b2) which limits its output to the numerical value of the phase error required for a predetermined capture range of the synchronization ;

p low-order terminals (nb) of the m-digit output of the low-pass filter (tp) are connected to the first input of a second adder (ad2) having its output coupled to the input of a third buffer memory (ps3) ;

the output of the third buffer memory (ps3) is connected to the second inputs of the first adder (ad1) and the second adder (ad2) and to the set input (es) of a digitally settable delay line (v) which consists of $2^p$ stages providing the same delay (tv) and whose setting-step size is equal to this delay (tv) and to the period (t) of the clock signal (ts) divided by $2^p$, the input of this delay line (v) being also connected to the maximum-count output (am) of a presettable counter (vz) to whose count input the clock signal (ts) is applied, and the output of the delay line (v) providing the synchronized pulse train (fi) ;

the overflow output (ao) of the second adder (ad2) is connected to the least significant terminal (lb) of the first input of a third adder (ad3) having its second input connected to the m-p remaining terminals (gb) of te low-pass-filter output, the third input of the third adder (ad3) being fed with the integral part of the desired value of the divisor, and the output of the third adder (ad3) being connected to the present input (ev) of the presettable counter (vz) ;

the enable input (eu) of the third buffer memory (ps3) is connected to one of those outputs (an) of the presettable counter (vz) lying before the maximumcount output (am) ;

to derive the switching signal from the frequency divider (ft), the output of the third adder (ad3) is connected to the first input of a first coincidence gate (kg1) and, through a divide-by-two divider (2d), to the first input of a second coincidence gate (kg2), and the second inputs of the coincidence gates (kg1, kg2) are connected to the outputs of the presettable counter (vz), while their outputs are connected to the add enable input (ae) and the subtract enable input (es), respectively, of the adder-subtracter (a/s), and the divisor input (dr) of the first divider (d1) is presented with the numerical value $2^p$.

2. Modification of the digital circuit claimed in claim 1 for the processing of negative composite colour signals, characterized by the following features :

The threshold stage (ws) is replaced by a subtracter-inverter stage (iv) whose first and second inputs are connected to the output of the analog-to-digital converter (aw) and to the output of the black-level measuring stage (sm), respectively, and in which a signal (v2) free of the horizontal synchronizing signal (hs) is formed from the digital composite colour signal (v1) and the digital black-level signal (sw') according to the following formula :

$$v2 = 1/2 \ (\sqrt{(sw' - v1)^2} + sw' - v1), \text{ and}$$

the output of the black-level measuring stage (sm) and the output of the first buffer memory (ps1) are connected to the minuend input (m) and the subtrahend input (s), respectively, of the subtracter (st), whose enable input (eu) is connected to the minuend-smaller-than-subtrahend output (m < s) of the first comparator (k1) (Fig. 3).

3. A digital circuit as claimed in claim 1 or 2, characterized by the following features :

The output of the black-level-measuring stage (sm) is connected to the minuend input (m) of a second comparator (k2) whose subtrahend input (s) is fed with the desired black level (sw) and whose minuend-greater-than-subtrahend output (m > s) is connected to the first input of an AND gate (u) to whose second input a pulse (sp) occurring during the back porch is applied in each line ;

the output of the AND gate (u) is connected to the control input of an electronic switch (sc) having one of its terminals grounded and the other terminal connected through a first resistor (w1) to the input of the analog-to-digital converter (aw), from which a second resistor (w2) is connected to a DC supply voltage source (ub), and

the composite colour signal is applied to the input of the analog-to-digital converter (aw) through a capacitor (c) (Fig. 4).

4. A digital circuit as claimed in any one of claims 1 to 3, characterized in that between the output of the threshold stage (ws) or of the substracter-inverter stage (iv) and the input of the adder-subtracter (a/s), a multi-input AND gate (mu) is inserted which has one additional input compared with the number of output lines of the threshold stage (ws) or of the subracter-inverter stage (iv), and that a noise suppression pulse (rp) occurring during the synchronizing pulses (hs) and overlapping the latter by ± 1 μs is applied to said additional input.

## Revendications

1. Circuit numérique de synchronisation d'un train d'impulsions (fi), constitué par le signal de sortie d'un diviseur de fréquence réglable (ft) pour un signal d'horloge (ts) ayant une fréquence supérieure d'au moins un ordre de grandeur à celle du train d'impulsions (fi), avec des impulsions de synchronisation lignes (hs) contenues dans un signal standard de télévision reçu qui, après démodulation, dans le téléviseur, fournit le signal composite de synchronisation et d'amplitude d'image couleur (signal FBAS), qui est introduit dans un convertisseur analogique-numérique (aw) déclenché par le signal d'horloge (ts), le rapport de division du diviseur de fréquence (ft) étant réglé en fonction de la différence de phase moyenne entre le train d'impulsions (fi) et les impulsions de synchronisation lignes (hs), calculée sur un temps d'établissement de la moyenne égal à un grand nombre de périodes des impulsions de synchronisation lignes (hs), un signal de commutation ayant un rapport impulsion/intervalle égal à 1/1 étant dérivé du diviseur de fréquence (ft) au milieu de l'impulsion de synchronisation ligne (hs), caractérisé par les éléments suivants, dans le cas du traitement d'un signal compositif positif :

la sortie du convertisseur analogique-numérique (aw) est reliée à l'entrée d'un étage de détection de seuil (ws) dont la valeur de seuil est égale au niveau de noir (sw) souhaité, à l'entrée d'un étage de mesure du niveau de noir (sm) dont l'entrée de validation (en) reçoit une impulsion (kp), l'impulsion de verrouillage pour chaque ligne lors du balayage, à l'entrée du diminuende (m) d'un premier comparateur (k1), et à l'entrée d'une première mémoire tampon (ps1) dont la sortie est reliée à l'entrée du terme soustractif (s) du premier comparateur (k1), la sortie « diminuende plus grand que terme soustractif » (m > s) du comparateur étant reliée à l'entrée de validation (eu) de la première mémoire tampon (ps1) ;

la sortie de l'étage de mesure du niveau de noir (sm) ou la sortie d'une mémoire non volatile reprogrammable (rm) contenant ledit niveau souhaité de noir (sw), et la sortie de la première mémoire tampon sont reliées respectivement à l'entrée du terme soustractif (s) et à l'entrée du diminuende (m) d'un soustracteur (st) dont la sortie est reliée à l'entrée du dividende (dd) d'un premier diviseur (d1) via un premier limiteur (b1) qui limite sa sortie à une valeur numérique positive proche de zéro ;

la sortie de l'étage de détection de seuil (ws) est reliée à l'entrée d'un terme à additionner/du diminuende (m) d'un additionneur/soustracteur (a/s) dont la sortie est reliée à l'entrée d'une seconde mémoire tampon (ps2), la sortie de cette dernière étant reliée à l'entrée de l'autre terme à additionner/du

8

terme soustractif (s) de l'additionneur/soustracteur (a/s) et à l'entrée du dividende (dd) d'un second diviseur (d2) ;

la sortie du second diviseur (d2) est reliée à la première entrée d'un premier additioneur (ad1) dont la sortie est reliée à l'entrée d'un filtre numérique passe-bas (tp) via un second limiteur (b2) qui limite sa sortie à la valeur numérique de l'erreur de phase requise pour une plage de capture prédéterminée de la synchronisation ;

p positions de chiffres moins significatif de la sortie à m chiffres du filtre passe-bas (tp) sont reliées à la première entrée d'un second additionneur (ad2) dont la sortie est reliée à l'entrée d'une troisième mémoire tampon (ps3) ;

la sortie de la troisième mémoire tampon (ps3) est reliée à la seconde entrée du premier additionneur (ad1), à la seconde entrée du second additionneur (ad2) et à l'entrée de réglage (es) d'une ligne à retard réglable numériquement (v), constituée de $2^P$ étages produisant le même retard (tv), dont le pas de réglage est égal à ce retard (tv) et à la période (t) des signaux d'horloge (ts) divisée par $2^P$, l'entrée de la ligne à retard (v) étant également reliée à la sortie de comptage maximum (am) d'un compteur réglable (vz) à l'entrée de comptage duquel est envoyé le signal d'horloge (ts), et la sortie de la ligne à retard fournissant le train d'impulsions synchronisé (fi) ;

la sortie de dépassement (ao) du second additionneur (ad2) est reliée à la position (1b) du chiffre le moins significatif de la première entrée d'un troisième additionneur dont la seconde entrée est reliée aux m-p poisitions restantes (gb) de la sortie du filtre passe-bas, la troisième entrée du troisième additionneur (ad3) recevant la partie entière de la valeur souhaitée du rapport de division, la sortie du troisième additionneur (ad3) étant reliée à l'entrée de réglage (ev) du compteur réglable (vz) ;

l'entrée de validation (eu) de la troisième mémoire tampon (ps3) est reliée à l'une des sorties (an) du compteur réglable (vz) parmi celles situées avant la sortie de comptage maximum (am) ;

pour dériver le signal de commutation du diviseur de fréquence (ft), la sortie du troisième additionneur (ad3) est reliée à la première entrée d'une première porte à coïncidence (kg1) et, à travers un diviseur par deux (2d), à la première entrée d'une seconde porte à coïncidence (kg2), les secondes entrées des portes à coïncidence (kg1, kg2) étant reliées aux sorties du compteur réglable (vz), tandis que leurs sorties sont reliées respectivement à l'entrée de validation d'addition (ae) et à l'entrée de validation d'addition de soustraction (es) de l'additionneur/soustracteur (as) ; et

l'entrée du rapport de division (dr) du premier diviseur (d1) est alimentée avec la valeur $2^P$.

2. Variante du circuit numérique selon la revendication 1, pour le traitement d'un signal composite négatif, caractérisé par les éléments suivants :

l'étage de détection de seuil (ws) est remplacé par un étage soustracteur/inverseur (iv) dont les première et seconde entrées sont reliées respectivement à la sortie du convertisseur analogique-numérique (aw) et à la sortie de l'étage de mesure du niveau de noir (sm) et dans lequel un signal (v2) indépendant du signal de synchronisation ligne (hs) est formé à partir du signal composite numérique (v1) et du signal de niveau de noir numérique selon la formule :

$$v2 = 1/2 \, (\sqrt{(sw' - v1)^2} + sw' - v1) \; ; \; et$$

la sortie de l'étage de mesure du niveau de noir (sm) et la sortie de la première mémoire tampon (ps1) sont reliées respectivement à l'entrée du diminuende (m) et à l'entrée du terme soustractif (s) du soustracteur (st), l'entrée de validation (eu) de la première mémoire tampon étant reliée à la sortie « dimuende plus petit que terme soustractif » (m < s) du premier comparateur (k1) (Fig. 3).

3. Circuit numérique selon la revendication 1 ou 2, caractérisé par les éléments suivants :

la sortie de l'étage de mesure du niveau de noir (sm) est reliée à l'entrée du diminuende (m) d'un second comparateur (k2) dont l'entrée du terme soustractif (s) est alimentée avec la valeur souhaitée du niveau de noir (sw) et dont la sortie « diminuende plus grand que terme soustractif » (m > s) est reliée à la première entrée d'une porte ET (u) dont la seconde entrée reçoit une impulsion (sp) déclenchée pour chaque ligne à un instant après le balayage de la partie résiduelle de palier arrière du noir ;

la sortie de la porte ET (u) est reliée à l'entrée de commande d'un commutateur électronique (sc) dont l'une des bornes est reliée à la masse et dont l'autre borne est reliée, au travers d'une première résistance (w1), à l'entrée du convertisseur analogique/numérique (aw), et duquel une seconde résistance (w2) conduit à une source de tension de courant continu (ub) ; et

le signal composite est appliqué à l'entrée du convertisseur analogique/numérique (aw), à travers une capacité (c) (Fig. 4).

4. Circuit numérique selon l'une quelconque des revendications 1 à 3 caractérisé en ce que, entre la sortie de l'étage de détection de seuil (ws) ou de l'étage soustracteur/inverseur (iv) et l'entrée de l'additionneur soustracteur (a/s), est insérée une porte ET à entrées multiples (mu) qui a une entrée de plus que le nombre de lignes de sortie de l'étage de détection de seuil (ws) ou de l'étage soustracteur/inverseur (iv), et en ce qu'une impulsion de suppression de bruit survenant durant les impulsions de synchronisation et dépassant ces dernières de ± 1 µs est appliquée à ladite entrée supplémentaire.

FIG.1

FIG. 2

FIG. 3

FIG. 4

FIG.5

FIG. 6